(19) Europäisches Patentamt
European Patent Office
Office européen des brevets

(11) **EP 3 127 429 B1**

(12) **EUROPÄISCHE PATENTSCHRIFT**

(45) Veröffentlichungstag und Bekanntmachung des Hinweises auf die Patenterteilung:
**13.12.2017 Patentblatt 2017/50**

(51) Int Cl.:
***A22C 11/08*** *(2006.01)*    ***A22C 11/02*** *(2006.01)*

(21) Anmeldenummer: **15179775.0**

(22) Anmeldetag: **05.08.2015**

(54) **FÜLLMASCHINE UND VERFAHREN ZUM ABFÜLLEN VON PASTÖSER MASSE, INSBESONDERE ZUM HERSTELLEN VON WÜRSTEN**

FILLING MACHINE AND METHOD FOR DISCHARGING PASTE-LIKE MASS, IN PARTICULAR FOR MANUFACTURING SAUSAGES

MACHINE DE REMPLISSAGE ET PROCEDE DE REMPLISSAGE DE MASSE PATEUSE, EN PARTICULIER POUR CONFECTIONNER DES SAUCISSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.02.2017 Patentblatt 2017/06**

(73) Patentinhaber: **Albert Handtmann Maschinenfabrik GmbH & Co. KG 88400 Biberach (DE)**

(72) Erfinder:
• **Maile, Bernd 88422 Oggelshausen (DE)**

• **Staudenrausch, Martin 88400 Biberach (DE)**

(74) Vertreter: **Grünecker Patent- und Rechtsanwälte PartG mbB Leopoldstraße 4 80802 München (DE)**

(56) Entgegenhaltungen:
EP-A1- 1 829 451    EP-A1- 2 377 405
DE-A1- 4 417 906    DE-A1- 10 233 468

Beschreibung

Die Erfindung betrifft eine Füllmaschine zum Abfüllen pastöser Massen sowie ein Verfahren, insbesondere zum Herstellen von Wüsten gemäß den Oberbegriffen der Ansprüche 1 und 8.

Aus der DE 44 17 906 A1 ist bereits eine Füllmaschine bekannt mit einer Ausbringe-Einrichtung am unteren Teil eines Vakuumtrichters und einem sich daran anschließenden Förderwerk. Diese Druckschrift beschreibt keine Dosierpumpe, die als austauschbares Bauteil ausgebildet ist und an ihrer Einlaufseite und Auslaufseite Anschlussbereiche aufweist, über die sie auf der Einlassseite mit dem Auslassende der Förderpumpe und auf der Auslaufseite mit Zubehör und/oder Vorsatzgeräten verbindbar ist.

Die EP 1 829 451 beschreibt eine Füllmaschine, in deren Trichter eine Zubringerkurve und eine Förderschnecke angeordnet sind und am Trichterauslass ein Förderwerk.

Füllmaschinen zum Abfüllen pastöser Massen, insbesondere zum Befüllen von Wursthüllen, sind bereits aus dem Stand der Technik bekannt. Füllmaschinen weisen in der Regel einen Trichter auf, der mit pastöser Masse befüllt wird, und aus dem die pastöse Masse über eine Förderpumpe, beispielsweise in ein Füllrohr, gefördert wird, aus dem die pastöse Masse in eine Wursthülle ausgestoßen wird. Mit einer entsprechenden Füllmaschine werden einzelne Portionen hergestellt, die nach Möglichkeit eine hohe Gewichtsgenauigkeit aufweisen sollen. Die Gewichtsgenauigkeit einer Füllmaschine, insbesondere Vakuumfüllmaschine, hängt von zahlreichen Einflüssen ab. Hierzu zählen unter anderem die Varianzen der umgebungs-, eingangsprodukt-, ausgangsprodukt-, maschinen- und prozessspezifischen Variablen. Insbesondere spielen Raum- und Produkttemperatur, Viskosität der abzufüllenden Masse, Füllrohr-Durchmesser, Pumpen-Geometrie, Fülltempo etc. eine Rolle.

Die zuvor genannten systematischen Einflüsse können zumindest teilweise durch entsprechende Gegenmaßnahmen kompensiert werden. Die Korrektur von Portionsgewichtsschwankungen erfolgt in der Praxis üblicherweise durch Nachjustieren des eingestellten Portionsgewichts bzw. Volumens an der Pumpe der Füllmaschine.

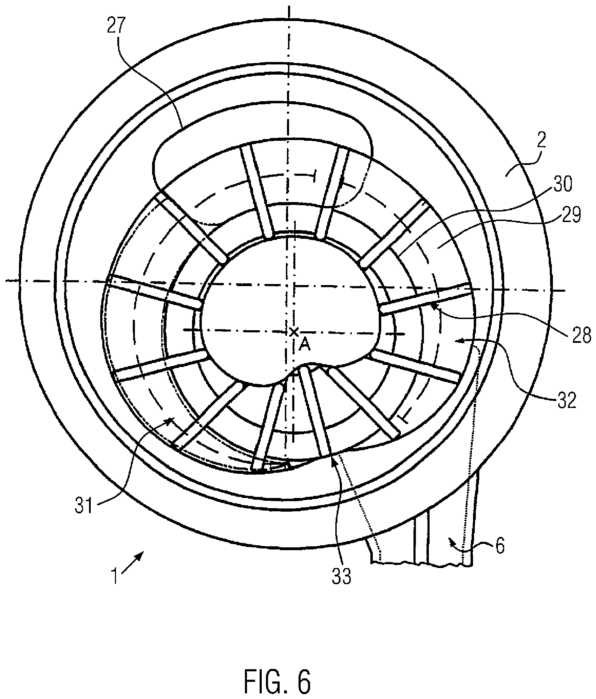

Zusätzlich treten in der Praxis jedoch sogenannte zufällige Fehler auf. Diese sind ungleich schwerer beherrschbar bzw. korrigierbar und tragen somit maßgeblich zu einer unbefriedigenden Gewichtsgenauigkeit der abgefüllten Portionen über einen längeren Zeitraum bei. Hierzu zählen in erster Linie unkontrollierbare Strömungsvorgänge innerhalb der Pumpe, infolge von Druckschwankungen im Auslassbereich der Flügelzellenpumpe. Bei Flügelzellenpumpen wird die pastöse Masse, die vom Umgebungsluftdruck vom Trichter in das Förderwerk gedrückt wird, in den Flügelzellen zum Auslass hin transportiert, während sich das Volumen der Flügelzellen zum Auslass hin verkleinert, derart, dass die pastöse Masse komprimiert wird und der Druck im Druckbereich zum Auslass hin zunimmt. So ist es möglich, dass es aufgrund von Druckdifferenzen zwischen Druck- und Saugbereich zu einer Druckausgleichströmung vom Druckbereich der Flügelzellenpumpe zum Saugbereich und somit zu Gewichtsungenauigkeiten kommt (siehe z.B. auch Fig.6, in der der Druckbereich mit 32 und der Saugbereich mit 31 bezeichnet ist). Es können auch Druckausgleichsströmungen zwischen einzelnen Kammern aufgrund kleiner Spalte auftreten.

Die Hauptproblematik der Portionsgewichtskompensationsverfahren liegt darin begründet, dass es sich hierbei um reaktive Iterationsverfahren handelt, d.h. infolge ständig driftender Ist -Werte sind die erzielbaren Portionsgewichtsgenauigkeiten häufig unbefriedigend - bei gleichzeitig erhöhtem Einstellaufwand.

Um eine höhere Portionsgenauigkeit zu erzielen, wurden bereits Lösungen versucht, bei denen zwei Dosierpumpen hintereinander angeordnet sind, d.h., dass eigentlich zwei Vakuumfüllmaschinen vorgesehen sein müssen, von denen eine einen Einfülltrichter aufweist. Dies führt jedoch zu einer Reihe von Nachteilen, wie z.B.

- hohe Kosten, - erhöhte Anzahl von Verschleißteilen, - schlechte Wirtschaftlichkeit, - erhöhte Ausfallwahrscheinlichkeit, - erhöhter Reinigungsaufwand, - erhöhter Platzbedarf, - erhöhter Energieverbrauch, - reduzierte Flexibilität, da die Anlage sperrig und nicht kurzfristig umrüstbar ist.

Hiervon ausgehend liegt der vorliegenden Erfindung die Aufgabe zugrunde, eine verbesserte Füllmaschine und ein verbessertes Verfahren zum Abfüllen pastöser Masse, insbesondere zum Herstellen von Würsten bereitzustellen, die eine hohe Portionsgenauigkeit gewährleisten und die oben genannten Nachteile vermeiden.

Erfindungsgemäß wird die Aufgabe durch die Merkmale der Ansprüche 1 und 8 gelöst.

Gemäß der vorliegenden Erfindung umfasst nun die Füllmaschine eine Förderpumpe zum Fördern der pastösen Masse mit einem ersten Antrieb und eine Dosierpumpe, die an einen Auslass, d.h. ein Auslassende der Förderpumpe gekoppelt ist, sowie einen Antriebsstrang, über den die Dosierpumpeneinheit mit einem in der Füllmaschine, insbesondere dem Füllmaschinengehäuse integrierten zweiten Antrieb gekoppelt ist. Das heißt, dass die Dosierpumpe ohne eigenen Antrieb an die Füllmaschine gekoppelt ist, wodurch die Dosierpumpe klein und handlich ist, so dass die Füllmaschine auch kurzfristig auf einfache Art und Weise umrüstbar ist, was zu einer großen Flexibilität führt. Da die Dosierpumpe ohne eigenen Antrieb ausgebildet ist, und durch einen für andere Funktionen bereits bestehenden Antrieb in der Füllmaschine, d.h. z.B. im Gehäuse der Füllmaschine, antreibbar ist, können Investitionskosten deutlich gesenkt werden und eine entsprechende Dosierpumpe auch einfach in bestehende Anlagen nachgerüstet werden. Die Dosierpumpe ist also beabstandet vom Antrieb angeordnet.

Gemäß einem bevorzugten Ausführungsbeispiel weist die Füllmaschine eine Einrichtung zum Erfassen, ob eine Dosierpumpe angekoppelt ist und/ oder vom zweiten Antrieb angetrieben werden soll auf. Eine solche Einrichtung kann beispielsweise ein Sensor sein, der anspricht, wenn die Dosierpumpe angekoppelt ist, wodurch eine Ansteuerung der Dosierpumpe aktiviert werden kann und/oder aber eine Eingabeeinrichtung, über die der Bediener eingeben kann, dass eine Dosierpumpe angekoppelt ist und/oder angetrieben werden soll. Die Einrichtung kann auch einen Produktspeicher umfassen, in dem für verschiedene herzustellenden Produktsorten entsprechende Prozessdaten hinterlegt sind, wobei auch hinterlegt ist, ob eine Dosierpumpe von dem zweiten Antrieb angetrieben werden soll. Diese Information kann dann von der Steuerung abgerufen werden.

Somit kann ein bestehender Antrieb auf einfache Art und Weise für die Dosierpumpe genutzt werden. Vorteilhafterweise umfasst die Füllmaschine eine Maschinensteuerung, die den ersten und zweiten Antrieb ansteuert. Dadurch, dass beide Antriebe von der Maschinensteuerung angesteuert werden, können die Funktionen und Betriebsparameter der beiden Antriebe optimal aufeinander abgestimmt werden.

Der zweite Antrieb ist ein in der Füllmaschine, d.h. hier z.B. im Maschinengehäuse, integrierter Antrieb, der von der Maschinensteuerung für die Verwendung anderer Vorsatzgeräte angesteuert werden kann, insbesondere für mindestens eines der folgenden Vorsatzgeräte: Füllwolf, Abdreheinheit, Längeneinheit, Clipper etc. Wenn eine Dosierpumpe angekoppelt ist, kann in der Maschinensteuerung die Funktion zum Ansteuern der Dosierpumpe ausgewählt werden.

Dadurch, dass ein bereits bestehender Antrieb verwendet wird, können weiter Kosten gespart werden, was die Maschine noch wirtschaftlicher macht. Der zweite Antrieb kann alternativ für die Dosierpumpe oder für ein anderes Vorsatzgerät über ein entsprechendes Getriebe verwendet werden. Somit kann werksseitig ein Antrieb eingebaut werden, der dann je nach Bedarf für unterschiedliche Vorsatzgeräte verwendet werden kann, was die Produktion wesentlich vereinfacht und die Produktionskosten senkt.

Vorteilhafterweise ist sowohl die Förderpumpe als auch die Dosierpumpe als Flügelzellenförderwerk ausgebildet, wobei die Größe der Dosierpumpe kleiner ist als die Größe der Flügelzellenpumpe. Das bedeutet, dass das Volumen, das von der Dosierpumpe pro Umdrehung (um 360°) gefördert werden kann, wesentlich kleiner ist als das entsprechende Volumen der Förderpumpe. So kann beispielsweise das pro Umdrehung geförderte Volumen der Förderpumpe, das als Schluckvolumen bezeichnet wird, in einem Bereich von 1200 - 2000 cm³ und das Schluckvolumen der Dosierpumpe in einem Bereich von 35 - 40 cm³ liegen. Das Schluckvolumen der Dosierpumpe beträgt daher etwa 1 - 30 % des Schluckvolumens der Förderpumpe, insbesondere 1,5-20 %. Dadurch, dass die Größe, d.h. hier die Abmessungen der Dosierpumpe, kleiner sind als die Abmessungen der Flügelzellenpumpe, kann die Dosierpumpe einfach gehandhabt werden und ist kostengünstig herzustellen. Die Dosierpumpe hat nur einen geringen Platzbedarf und kann so einfach in das bestehende Leitungssystem integriert werden. Dadurch, dass die Flügelzellen wesentlich kleiner sind als die der Förderpumpe, kann eine sehr hohe Gewichtsgenauigkeit erzielt werden. In dem genannten Volumenbereich ist die Dimensionierung der Dosierpumpe so klein wie möglich, um die beste Gewichtsgenauigkeit zu erhalten, jedoch so groß wie nötig, damit die geforderte Pumpleistung erreicht werden kann und die gegebenenfalls in der Masse enthaltenen Einlagen (z.B. Fleischstücke) problemlos und schonend gefördert werden können.

Vorteilhafterweise ist die Dosierpumpe derart ausgebildet, dass die Anzahl der Flügelzellen und/oder das Volumen der Flügelzellen veränderbar ist, wobei vorzugsweise ein Rotor und/oder die Pumpenflügel austauschbar angeordnet sind und/oder Distanzelemente einsetzbar sind, die das Volumen der Flügelzellen verkleinern.

Somit kann die Dosierpumpe schnell und einfach an die jeweiligen Anforderungen angepasst werden, ohne ausgetauscht werden zu müssen. Die Kammergröße des Förderwerks kann durch Ändern der Flügelanzahl geändert werden, derart, dass sich eine veränderte Anzahl an Flügelzellen ergibt. Durch die Distanzelemente kann das Pumpenvolumen und damit die Förderleistung angepasst werden. Auch kann die Größe der Flügelzellen an die maximal zu verarbeitende Stückigkeit der Produkteinlagen angepasst werden. Es kann beispielsweise ein Distanzring am Rotor-Außendurchmesser und/oder am Pumpenboden und/oder am Pumpendeckel etc. angebracht werden. Nach Entnehmen dieses Distanzelements oder Rings vergrößert sich der Pumpenraum. In Verbindung mit größeren Flügelzellen erhält man auf diese Weise eine größere Dosierpumpe mit entsprechend höherer Pumpleistung.

Die Dosierpumpe ist als austauschbares Bauteil ausgebildet, die an ihrer Einlaufseite und Auslaufseite Anschlussbereiche aufweist, über die sie an ihrer Einlassseite mit dem Auslassende der Förderpumpe und auf der Auslaufseite mit Zubehör und/oder einem Vorsatzgerät verbindbar ist, insbesondere mit einem Füllrohr oder einem Füllwolf oder einer Abdrehlinie, etc. Das heißt, dass die Pumpe einfach in bestehende Anlagen integriert werden kann, da der Anschluss der Dosierpumpe kompatibel zum Auslass der Füllmaschine ist und der Auslass der Dosierpumpe identisch mit dem Auslass der Füllmaschine. Dadurch passen Zubehör und Vorsatzgeräte der Füllmaschine auch an die Dosierpumpe. Es ergibt sich ein schnelles und einfaches Andocken, ohne Zusatzkosten an der Füllmaschine zu verursachen. Die Dosierpumpe passt somit durch die Anschlussbereiche, d.h. hier durch die standardisierten Schnittstellen, an alle gängigen Füllmaschinen.

Die Antriebe können derart angesteuert werden, dass eine Differenz $|\Delta p|$ zwischen einem ersten Druck $p_1$ vor der Dosierpumpe und einem Druck $p_2$ nach der Dosierpumpe vorzugsweise in einem Bereich $|\Delta p| = 0$ bis 5 bar liegt.

Gemäß einem bevorzugten Ausführungsbeispiel ist ein erster Drucksensor in Förderrichtung vor der Dosierpumpe und ein zweiter Drucksensor in Förderrichtung nach der Dosierpumpe vorgesehen. Vorteilhafterweise sind die Drucksensoren in den Anschlussbereichen der Dosierpumpe ausgebildet. Es ist auch möglich, dass der erste Drucksensor in Förderrichtung noch vor dem Auslassende der Förderpumpe angeordnet ist. Vorzugsweise werden die Messwerte der Maschinensteuerung zugeführt, wobei die Steuereinrichtung die Antriebe derart ansteuert, dass die Druckdifferenz $|\Delta p|$ zwischen den von dem ersten und zweiten Drucksensor gemessenen Drücken vorzugsweise in einem Bereich von 0 bis 5 bar liegt. Wenn die Drucksensoren in der Dosierpumpe integriert sind, dient die Dosierpumpe als Messzelle.

Es ist also möglich, dass eine möglichst kleine Druckdifferenz zwischen Eingangs-($p_1$) und Ausgangsdruck ($p_2$) an der Dosierpumpe herrscht, um unkontrollierbare Volumenströme zwischen Eingangs- und Ausgangsseite zu verhindern. Je geringer die Druckdifferenz $\Delta p$ an der Dosierpumpe ist, desto höher ist die erzielbare Portionsgewichtsgenauigkeit. Dabei wird die Dosierpumpe vorzugsweise unter einem (einstellbaren) konstanten Beschickungsdruck $p_1$ betrieben. Beim erfindungsgemäßen Verfahren zum Abfüllen von pastöser Masse wird pastöse Masse über eine Förderpumpe mit einem ersten Antrieb zu einer Dosierpumpe gefördert, die über einen Getriebestrang von einem in der Füllmaschine, insbesondere dem Füllmaschinengehäuse integrierten zweiten Antrieb angetrieben wird, wobei die Dosierpumpe als austauschbares Bauteil ausgebildet ist und an ihrer Einlaufseite und Auslaufseite Anschlussbereiche aufweist, über die sie auf der Einlassseite mit dem Auslassende der Förderpumpe und auf der Auslaufseite mit Zubehör und/oder Vorsatz geräten verbindbar ist, insbesondere mit einem Füllrohr oder einer Haltevorrichtung, oder einer Aufhängelinie. Dabei wird zunächst von einer Einrichtung erfasst, ob eine Dosierpumpe angekoppelt ist oder nicht, wobei wenn erfasst wird, dass eine Dosierpumpe eingebaut ist, eine Maschinensteuerung den zweiten Antrieb für die Verwendung der Dosierpumpe ansteuert und wenn erfasst wird, dass keine Dosierpumpe eingebaut ist, der zweite Antrieb für die Verwendung anderer Vorsatzgeräte angesteuert werden kann. Somit kann ein bestehender Antrieb der Füllmaschine für die Dosierpumpe verwendet werden, ohne dass ein zusätzlicher teurer Antrieb installiert werden muss. Dies bringt darüber hinaus den Vorteil mit sich, dass werksseitig eine Füllmaschine mit einem zweiten Antrieb gefertigt werden kann, der dann für unterschiedliche Zwecke und für unterschiedliche Vorsatzgeräte je nach Bedarf und Kundenwunsch verwendet werden kann. Werksseitig muss dafür nur ein Anlagentyp gefertigt werden, so dass erhebliche Kosten eingespart werden können und der Herstellungsprozess vereinfacht werden kann. Die Information an die Steuerung, welches Vorsatzgerät vom zweiten Antrieb angesteuert werden soll, kann auch manuell an der Eingabeeinheit eingegeben werden, oder kann in einem Produktspeicher für die verschiedenen herzustellenden Produktsorten hinterlegt sein und von der Steuerung abgerufen werden.

Vorzugsweise wird der Druck $p_1$ in Förderrichtung vor der Dosierpumpe gemessen und der Druck $p_2$ hinter der Dosierpumpe. Der Druckmesser zum Messen von $p_1$ vor der Dosierpumpe muss nicht zwangsläufig in dem Dosierpumpenmodul integriert sein, sondern kann auch in der Füllmaschine noch vor dem Auslassende gemessen werden. Dabei kann der Druck $p_1$ vorzugsweise auf einen konstanten Wert eingestellt oder geregelt werden.

Der Antrieb der Förderpumpe und der Dosierpumpe kann derart erfolgen, dass vorzugsweise $|p_1-p_2| = \Delta p = 0$ bis 5 bar. Dieser bevorzugte definierte Bereich kann entweder in die Steuerung eingegeben werden oder er ergibt sich aus einer entsprechenden Ansteuerung der Pumpen.

Gemäß einem bevorzugten Ausführungsbeispiel kann das Volumen und/oder die Anzahl der Flügelzellen der Dosierpumpe verändert werden, insbesondere in Abhängigkeit von mindestens einem der folgenden Parameter: Gewicht der zu erzeugenden Einzelportion, Soll-Förderleistung der Dosierpumpe, Stückigkeit der Einlagen im Produkt, Viskosität, etc.

Vorzugsweise wird der Druck $p_1$ am Auslass der Förderpumpe durch eine Regeleinrichtung geregelt. Alternativ dazu kann auch das von der Förderpumpe geförderte Volumen pro Zeit oder ein proportionaler Wert geregelt werden, wobei beispielsweise eine Lageregelung durchgeführt wird. Vorzugsweise wird die zuvor genannte Druckregelung für das Förderwerk durchgeführt.

Der Druck $p_2$ nach dem Auslauf der Dosierpumpe kann ebenfalls mit einer entsprechenden Regeleinrichtung geregelt werden oder aber das von der Dosierpumpe geförderte Volumen pro Zeit oder ein proportionaler Wert wird geregelt, wobei insbesondere eine Lageregelung durchgeführt wird.

Vorzugsweise wird für die Dosierpumpe das Volumen pro Zeit oder ein proportionaler Wert geregelt bzw. eine Lageregelung durchgeführt.

Gemäß der Erfindung ist nun die Dosierpumpe außerhalb des Füllmaschinengehäuses angeordnet und der zweite Antrieb innerhalb des Füllmaschinengehäuses, wobei am Füllmaschinengehäuse eine Kupplung, beispielsweise eine Klauenkupplung, angeordnet ist zum Ankuppeln des Getriebestrangs an den zweiten Antrieb. Somit kann eine entsprechende Dosierpumpe mit einem Getriebestrang sehr einfach und schnell installiert oder nachgerüstet werden.

Bei der Vorrichtung und dem Verfahren werden vorzugsweise die beiden Antriebe derart angetrieben, dass gilt: $|p_0 - p_1| > |p_1 - p_2|$, wobei $p_0$ der Druck auf der Saugseite der Förderpumpe (2) ist, $p_1$ der Druck am Auslass der Förderpumpe vor der Dosierpumpe, und der Druck $p_2$ der Druck am Auslass der Dosierpumpe. Dies führt zu einer besonders guten Gewichtsgenauigkeit.

Die vorliegende Erfindung wird nachfolgend unter Bezugnahme folgender Figuren näher erläutert.

Fig. 1 zeigt grob schematisch eine teilweise aufgerissene Draufsicht auf eine Füllmaschine gemäß der vorliegenden Erfindung.

Fig. 2 zeigt grob schematisch einen Querschnitt durch mehrere unterschiedliche Ausführungsformen einer Dosierpumpe gemäß der vorliegenden Erfindung.

Fig. 3 zeigt schematisch eine teilweise aufgerissene perspektivische Darstellung eines Ausführungsbeispiels einer Dosierpumpe.

Fig. 4 zeigt schematisch eine Seitenansicht einer Füllmaschine gemäß der Erfindung.

Fig. 5 zeigt in perspektivischer Darstellung eine Förderpumpe gemäß der Erfindung.

Fig. 6 zeigt schematisch eine Draufsicht auf ein Förderwerk bei abgenommenem Deckel.

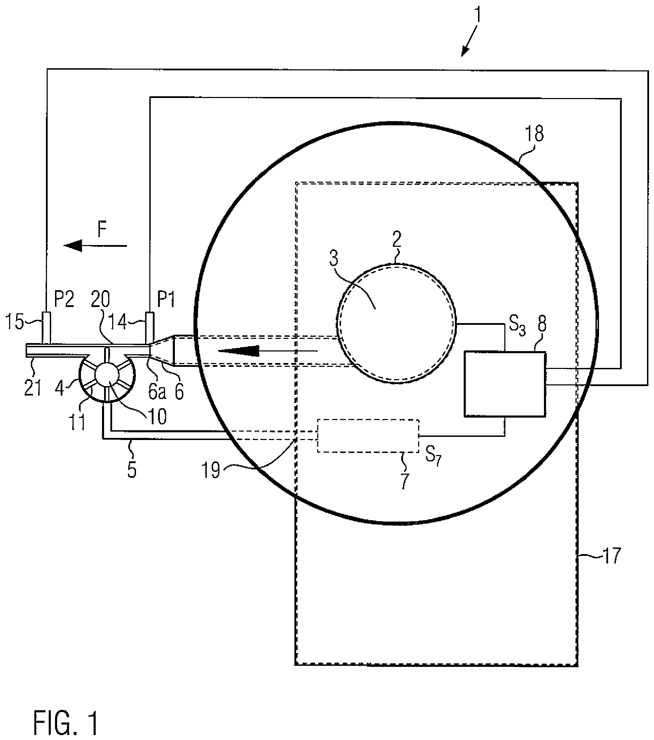

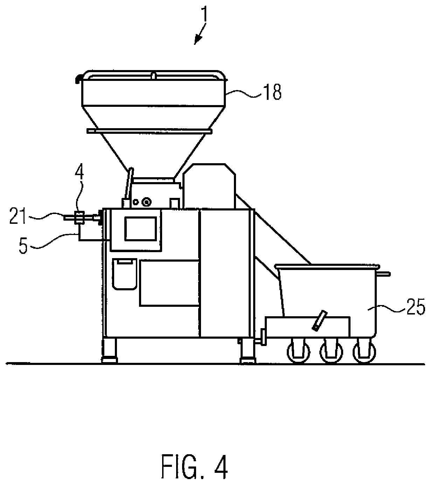

Fig. 4 und 1 zeigen eine Füllmaschine gemäß der vorliegenden Erfindung. Eine Füllmaschine 1, insbesondere eine Vakuumfüllmaschine, umfasst einen Trichter 18, in den, beispielsweise über den Hubwagen 25, pastöse Masse eingefüllt wird. Aus dem unteren Bereich des Trichters wird die pastöse Masse über eine Förderpumpe 2, insbesondere eine Flügelzellenpumpe, die nachfolgend noch näher beschrieben wird, zu einem Auslass 6 der Füllmaschine gefördert, wobei an das Auslassende 6a eine Dosierpumpe 4 gekoppelt ist, derart, dass die pastöse Masse weiter von der Dosierpumpe 4 in Förderrichtung F transportiert wird.

Die Förderpumpe 2 ist vorteilhafterweise eine Flügelzellenpumpe mit integriertem Antrieb 3, d.h. Antriebsmotor.

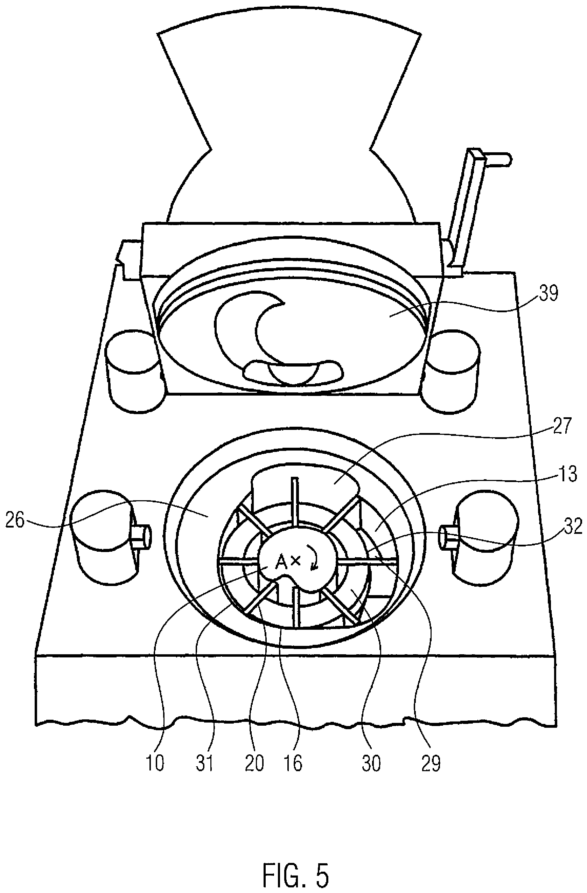

Fig. 5 und 6 zeigen eine entsprechende Flügelzellenpumpe 2 mit einem Gehäuse 26 und einem schwenkbaren Deckel 39, sowie einen Einlass 27 und einen Auslass 6 für die pastöse Masse. Der Einlass 27 ist beispielsweise mit dem Auslass des Trichters 18 verbunden, über den die pastöse Masse der Förderpumpe 2 zugeführt wird. Der Auslass 6 ist normalerweise am Auslassende 6a mit einem hier nicht dargestellten Füllrohr verbunden. Hier ist anstelle des Füllrohrs die zuvor genannte Dosierpumpe 4 angeschlossen, wobei der Anschlussbereich 20 der Dosierpumpe 4 kompatibel zum Auslassende 6a der Förderpumpe 2 ist. Die Förderpumpe 2 weist z.B. in dem Pumpengehäuse 26 einen vorzugsweise exzentrisch angeordneten in Drehung versetzbaren Rotor 30 auf, der über eine Pumpenwelle um die Achse A von dem ersten Antrieb 3 angetrieben wird. Der Rotor 30 weist radial verschiebbar gelagerte Flügel 28, die mit der Innenwandung, dem Boden und dem Deckel des Gehäuses 26 Flügelzellen bzw. Förderzellen 29 bilden. Der Rotor 30 ist z.B. exzentrisch um einen feststehenden Spannexzenter 10 gelagert. Durch Drehung des Rotors bzw. der Flügel, kann in bekannter Weise pastöse Masse in den Förderzellen bzw. Flügelzellen 29 vom Einlass zum Auslass gefördert werden. Die Flügelzellenpumpe lässt sich allgemein in mehrere Bereiche einteilen. Einer dieser Bereiche ist der Saugbereich 31, ein weiterer ist der Druckbereich 32, wobei ein Dichtbereich 33 den Druckbereich 32 vom Saugbereich 31 trennt. Der Druckbereich 32 beginnt in Drehrichtung nach dem Einlass 27 und verläuft bis zum Auslass 6. Nach dem Druckbereich 32, der in Drehrichtung des Rotors nach dem Auslass 6 endet, schließt sich der Dichtbereich 33 an, welcher den Druckbereich vom Saugbereich trennt. Der Saugbereich 31 beginnt z.B. an einer Stelle, an der der spaltartige Abstand zwischen dem Rotor und der Innenwand des Gehäuses wieder zunimmt, derart, dass sich die Förderzellen wieder vergrößern. Der Saugbereich 31 verläuft bis zum Ende des Einlasses 27. Im Saugbereich herrschen z.B. Drücke von 0,005 bis 1 bar. Im Saugbereich 31 kann z.B. in der Gehäusewandung eine Vakuumöffnung ausgebildet sein, die über eine Saugleitung mit einer Vakuumpumpe verbunden ist. Somit kann dieser Bereich evakuiert werden. Der Druck $p_1$ im Auslassbereich 6, d.h. vor der Dosierpumpe 4, beträgt beispielsweise 20 bis 40 bar. Die Größe der Flügelzellen variiert in Abhängigkeit der Position der Kammer und liegt beispielsweise in einem Größenbereich von 10 bis 50 $cm^3$. Wie bereits erläutert, ist am Ende 6a des Auslasses die Dosierpumpe 4 über den Anschlussbereich angekoppelt.

Die Dosierpumpe 4 ist eine Dosierpumpe ohne integrierten Antrieb und ist als tragbares Dosierpumpenmodul ausgebildet, das auf einfache Art und Weise integriert werden kann.

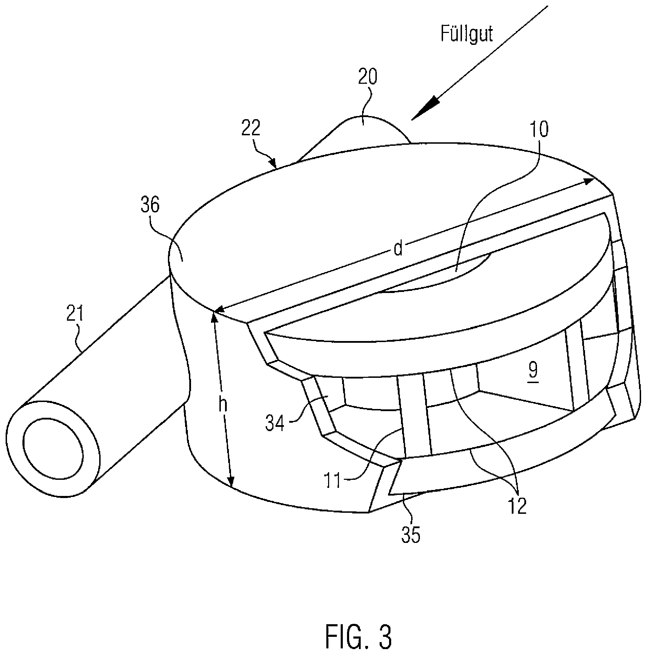

Fig. 3 zeigt in perspektivischer Darstellung eine teilweise aufgerissene Dosierpumpe 4. Auch die Dosierpumpe ist als Flügelzellenförderwerk ausgebildet und weist ein Gehäuse 22 auf sowie zwei Anschlussbereiche 20, 21, hier z.B. in Form von Rohrstutzen. Im abgeschlossenen Pumpengehäuse 22 ist, wie auch im Zusammenhang mit der Förderpumpe 2 beschrieben, ein drehbarer Rotor 10 angeordnet, in dem mehrere Pumpenflügel 11 gelagert sind, derart, dass die Flügel 11 zusammen mit der Wandung 34 des Pumpengehäuses 22, dem Boden 35 des Gehäuses sowie der Oberseite des Gehäuses 36, das auch als aufschwenkbarer Deckel ausgebildet sein kann, Flügelzellen 9 bilden. Bei dem in Fig. 3 gezeigten Ausführungsbeispiel sind Distanzelemente 12, d.h. hier Distanzringe, angeordnet, so dass die Flügel 11 mit der Wandung 34 der Rotorinnenfläche sowie den Distanzringen 12 die Flügelzellen 9 bilden. Zum Ändern des Pumpenvolumens und damit der Förderleistung, der maximal zu verarbeitenden Stückigkeit der Produkteinlagen etc. können Distanzelemente, z.B. einen Distanzring am Rotor-Außendurchmesser und / oder am Pumpenboden und / oder am Pumpendeckel etc. vorgesehen sein. Nach Entfernen der Distanzelemente oder eines entsprechenden Distanzrings vergrößert sich der Pumpenraum, d.h. das Volumen der Flügelzellen 9 wieder.

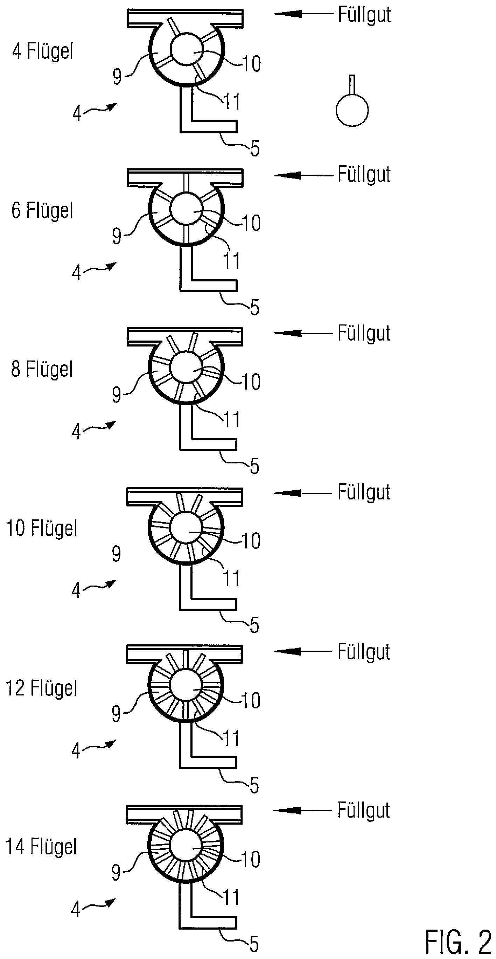

Aber nicht nur durch entsprechende Distanzelemente kann das Volumen der Flügelzellen 9 geändert werden. Die Dosierpumpe 4 kann vorzugsweise so ausgeführt werden, dass z.B. durch Austausch von Rotor 10 und Pumpenflügel 11 die Pumpe schnell an die jeweiligen Anforderungen angepasst werden kann. Fig. 2 zeigt die Dosierpumpe 4 mit einer jeweils unterschiedlichen Anzahl von Flügeln, derart, dass sich auch das Flügelzellenvolumen entsprechend ändert.

In diesen Ausführungsbeispielen ist der Rotor 10 zentrisch ausgebildet, und die Flügelzellen weisen vorzugsweise, um eine Umdrehung von 360° betrachtet, die gleiche Größe auf. Hier soll der Druck auf der Saugseite $p_1$ im Wesentlichen dem Druck $p_2$ auf der Druckseite sein, d.h. vor der Dosierpumpe 4 soll im Wesentlichen der gleiche Druck herrschen wie nach der Dosierpumpe, wobei ein Toleranzbereich von $|\Delta p| = |p_1 - p_2| = 0$ bis 5 bar ausreichend ist.

Auf jeden Fall ist die Dosierpumpe 4 viel kleiner ausgebildet als die Förderpumpe 2, derart, dass das Schluckvolumen der Dosierpumpe wesentlich kleiner ist als das Schluckvolumen der Förderpumpe 2. Der Durchmesser des Pumpengehäuses 22 liegt typischerweise in einem Bereich von 100 bis 200 mm. Die Höhe h der Dosierpumpe 4 liegt z. B. in einem Bereich von 30 bis 150 mm. Die pastöse Masse, die über dem Endbereich 20 in die Dosierpumpe 4 tritt, wird in den Flügelzellen 9 durch Drehen des Rotors 10 zum Endbereich 21, d.h. dem Auslass der Dosierpumpe, gefördert. Der Rotor 10 wird nicht durch einen integrierten Antrieb angetrieben, sondern durch das in den Figuren mit 5 bezeichnete Getriebe, das an eine Kupplung 19, z.B. Klauenkupplung, am Füllmaschinengehäuse 17 angekoppelt wird, derart, dass die Dosierpumpe 4 von dem Antrieb 7 angetrieben werden kann. Der Antrieb 7 ist ebenso wie der Antrieb 3 beispielsweise ein elektrischer Antriebsmotor. Der Getriebestrang 5 kann somit auf einfache Art und Weise mit der Kupplung 19 am Maschinengehäuse 17 und einer Kupplung an dem Gehäuse 22 der Dosierpumpe angekoppelt werden.

Der zweite Antrieb 7 ist ein bestehender Antrieb, der auch für andere Vorsatzgeräte, wie beispielsweise Füllwolf, Abdreheinheit, Clipper, Längeneinheit etc. verwendet werden kann. Die Füllmaschine 1 kann eine Einrichtung umfassen zum Erkennen, ob die Dosierpumpe 4 eingebaut ist. Dazu kann beispielsweise ein nicht dargestellter Sensor vorgesehen sein, der anspricht, wenn die Dosierpumpe 4 eingebaut ist und ein entsprechendes Signal an die Steuerung 8 der Füllmaschine schickt. Für die Einrichtung zum Erkennen, ob die Dosierpumpe angeschlossen ist, kann auch eine Eingabevorrichtung vorgesehen sein, über die ein Bediener eingibt, dass die Dosierpumpe angeschlossen ist bzw. vom zweiten Antrieb angetrieben werden soll. Es werden dann entsprechende Signale an die Steuerung 8 weitergeleitet. Die Information an die Steuerung, welches Vorsatzgerät vom zweiten Antrieb angetrieben werden soll, kann auch in einem Produktspeicher für die verschiedenen herzustellenden Produktsorten hinterlegt sein und von der Steuerung abgerufen werden.

Dann kann die Steuerung 8 den zweiten Antrieb 7 entsprechend einem bestimmten Programm und entsprechend bestimmter Parameter ansteuern. Wenn über die Einrichtung erfasst wird, dass keine Dosierpumpe 4 installiert ist, so treibt die Steuerung 8 den Antrieb 7 nicht an oder aber treibt diesen für die Verwendung eines anderen Vorsatzgeräts an. Die Steuerung 8 steuert sowohl den Antrieb 3 als auch den Antrieb 7 an und kann somit die Funktionen der beiden Antriebe aneinander anpassen. Die beiden Antriebe 3, 7 werden derart angesteuert, dass der Druckunterschied $\Delta p$ zwischen dem Auslass 6 der Förderpumpe und dem Auslass der Dosierpumpe 4 $\leq 5$ bar ist. Dazu kann ein erster Drucksensor 14 vorgesehen sein, der den Druck $p_1$ misst, der im Auslass 6 der Förderpumpe 2 herrscht bzw. vor der Dosierpumpe 4 und ein Drucksensor 15, der hinter der Dosierpumpe 4 angeordnet ist. Entsprechende Messwerte werden dann an die Steuerung 8 weitergeleitet, die dann die Antriebe derart ansteuern kann, dass z. B. $|p_1 - p_2| = 0$ bis 5 bar. Der Sensor 14 muss nicht zwangsläufig an der Dosierpumpe 4 angeordnet sein, sondern kann auch noch vor dem Auslassende 6a angeordnet sein.

Wenn die Drucksensoren 14 und 15 direkt an der Dosierpumpe 4 angeordnet sind, so dient die Dosierpumpe auch als Messzelle.

Somit können Volumenströme infolge hoher Druckdifferenzen $\Delta p$ verhindert werden. Die Dosierpumpe ist so bemessen, dass sie dem Beschickungsdruck $p_1$ in allen Fällen standhält, z.B. auch bei fehlendem Gegendruck in der Dosierpumpe (beim Starten des Prozesses, beim Leerfüllen, etc.).

Die Förderpumpe 2 ist vorzugsweise druckgeregelt. Das heißt, dass beispielsweise der Druck $p_1$ am Auslass der Förderpumpe auf einen bestimmten Sollwert $p_{1Soll}$ geregelt wird. Das Stellglied dabei ist der Antrieb 3, der mit einem entsprechenden Drehmoment angetrieben wird.

Es ist aber auch möglich, den Volumenstrom zu regeln bzw. das Fördervolumen pro Zeit $\dfrac{\Delta v}{\Delta t}$ oder einen entsprechend proportionalen Wert. Für eine entsprechende Regelung kann eine

Lageregelung durchgeführt werden, bei der die Lage der Flügel in Abhängigkeit der Zeit geregelt wird. Befindet sich ein Flügel nicht zu einem bestimmten Zeitpunkt in einer bestimmten Lage, so wird der Antrieb 3 von der Steuerung 8 entsprechend angesteuert, derart, dass zu einem bestimmten Zeitpunkt sich ein Flügel in einer Solllage befindet.

Eine Druckregelung ist für die Förderpumpe 2 besonders vorteilhaft.

Die Dosierpumpe kann auch druckgeregelt betrieben, derart, dass der Druck $p_2$ auf einen Sollwert $p2 = p2_{Soll}$ geregelt wird. Dabei liegt $p2_{Soll}$ in einem Bereich von $p_1 \pm \Delta p$, wobei $\Delta p$ vorzugsweise 0 bis 5 bar beträgt. Da $p_1$ konstant eingestellt oder geregelt wird, kann $p_2$ entsprechend nachgeregelt werden. Vorzugsweise wird für die Dosierpumpe 4 jedoch der Volumenstrom oder ein entsprechend proportionaler Wert geregelt bzw. lagegeregelt, wie in Zusammenhang mit der Förderpumpe 2 beschrieben wurde. Bei der Lageregelung wird wie zuvor beschrieben die zeitliche Abweichung der Solllage eines Flügels bestimmt.

Der Anschlussbereich 21 der Dosierpumpe ist derart ausgebildet, dass die Dosierpumpe 4 mit weiteren Vorsatzgeräten verbunden werden kann, beispielsweise mit einem Füllrohr, einer Haltevorrichtung, einer Aufhängelinie, etc. Somit kann auf einfache Art und Weise die Dosierpumpe in einen bestehenden Produktstrom integriert werden. Die Dosierpumpe passt durch standardisierte Schnittstellen an alle gängigen Füllmaschinen.

Bei den erfindungsgemäßen Verfahren wird zunächst eine Dosierpumpe verwendet, deren Flügelzellenvolumen an die entsprechenden Anforderungen angepasst wurde, wie beispielsweise durch Ändern der Gesamtanzahl der Flügelzellen bzw. Kammern oder durch Einsetzten oder Entnahme von Distanzelementen bzw. Distanzringen.

Bei einer möglichen Ausführungsform erkennt dann eine Einrichtung ob eine Dosierpumpe angeschlossen ist und sendet ein entsprechendes Signal an die Maschinensteuerung 8.

Pastöse Masse wird aus dem Trichter 18 der Förderpumpe 2 zugeführt, die entsprechend einem bestimmten Programm von der Steuerung 8 angesteuert wird und pastöse Masse in Förderrichtung F zu dem Auslass 6 der Förderpumpe 2 fördert. Die Förderpumpe 2 wird mit einer bestimmten Förderleistung betrieben und insbesondere druckgeregelt, wie zuvor beschrieben wird, derart, dass $p_1$ in einem vorbestimmten Sollbereich liegt. Am Ende 6a des Auslasses 6 ist die Dosierpumpe 4 angeordnet. Die pastöse Masse wird dann von der Dosierpumpe 4 weiter durch die Förderzellen 9 in Förderrichtung F zum Auslass der Dosierpumpe 4 gefördert. Die Steuerung steuert die Antriebe 3 und 7 derart an, dass $|p_1 - p_2| = |\Delta p| = 0 - 5$ bar. Dazu kann beispielsweise über entsprechende Sensoren 14 und 15 der Druck $p_1$ und der Druck $p_2$ gemessen werden und an die Steuerung 8 geleitet werden. Es ist vorteilhaft, wenn die Dosierpumpe 4 volumengeregelt bzw. lagegeregelt wird, derart, dass ein vorbestimmtes Volumen pro Zeit aus der Dosierpumpe 4 ausgestoßen werden kann. Da die Flügelzellen der Dosierpumpe viel kleiner sind als die Flügelzellen der Förderpumpe 2 und dadurch, dass der Dif-

ferenzdruck zwischen $p_1$ und $p_2$ viel kleiner ist als der Differenzdruck zwischen Saug- und Druckseite der Förderpumpe 2, kann die Volumengenauigkeit und damit die Portionsgenauigkeit der zu erzeugenden Portionen wesentlich erhöht werden. Das bedeutet, dass gilt, dass $|p_0 - p_1| > |p_1 - p_2|$, wobei $p_0$ der Druck auf der Saugseite der Förderpumpe 2 ist, $p_1$ der Druck am Auslass der Förderpumpe vor der Dosierpumpe 4, und der Druck $p_2$ der Druck am Auslass der Dosierpumpe 4. Am Endbereich 21 der Dosierpumpe 4 ist dann beispielsweise ein Füllrohr ausgebildet. Das Füllrohr kann auch einstückig mit der Dosierpumpe verbunden sein. Die pastöse Masse kann dann beispielsweise in eine Wursthülle ausgestoßen werden. Die gefüllte Wursthülle kann beispielsweise von einem Abteilelement, das in die gefüllte Wursthülle eingreift und die pastöse Masse verdrängt, in Einzelportionen abgeteilt und gegebenenfalls auch abgetrennt werden. Da der Volumenstrom von der Dosierpumpe konstant ist, die Druckdifferenz $\Delta p = p_1 - p_2$ sehr klein ist und die Flügelzellen ein kleines Volumen aufweisen kann eine sehr exakte Gewichtsgenauigkeit erzielt werden.

**Patentansprüche**

1. Füllmaschine (1) zum Abfüllen pastöser Masse, insbesondere zum Herstellen von Würsten, umfassend:

   eine Förderpumpe (2) zum Fördern der pastösen Masse mit einem ersten Antrieb (3), eine Dosierpumpe (4), die an einen Auslass (6) der Förderpumpe (2) gekoppelt ist und

   einen Antriebstrang (5), über den die Dosierpumpe (4) mit einem in der Füllmaschine (1) integrierten zweiten Antrieb (7) gekoppelt ist, wobei die Dosierpumpe (4) als austauschbares Bauteil ausgebildet ist und an ihrer Einlaufseite und Auslaufseite Anschlussbereiche (20,21) aufweist, über die sie auf der Einlassseite mit dem Auslassende (6a) der Förderpumpe (2) und auf der Auslaufseite mit Zubehör und/oder Vorsatzgeräten verbindbar ist, insbesondere mit einem Füllrohr (13) oder einer Haltevorrichtung, oder einer Aufhängelinie.

2. Füllmaschine (1) nach Anspruch 1, **dadurch gekennzeichnet, dass** die Füllmaschine (1) eine Einrichtung zum Erfassen, ob eine Dosierpumpe (4) angekoppelt ist und/oder vom zweiten Antrieb (7) angetrieben werden soll aufweist, wobei die Einrichtung entweder
   einen Sensor umfasst, der erfasst ob die Dosierpumpe (4) eingebaut ist und/ oder
   eine manuelle Eingabeeinrichtung und/oder
   einen Produktspeicher, in dem für unterschiedliche herzustellende Produkte abgespeichert ist, ob die Dosierpumpe vom zweiten Antrieb angesteuert werden soll, wobei diese Information an eine Maschinensteuerung weitergeleitet werden kann.

3. Füllmaschine (1) nach Anspruch 1 oder 2, **dadurch gekennzeichnet, dass** die Füllmaschine (1) eine Maschinensteuerung (8) umfasst, die den ersten Antrieb (3) oder den ersten und zweiten Antrieb (3, 7) ansteuert.

4. Füllmaschine (1) nach mindestens einem der Ansprüche 1- 3, **dadurch gekennzeichnet, dass** der zweite Antrieb (7) ein Antrieb ist, der von der Maschinensteuerung (8) für die Verwendung anderer Vorsatzgeräte angesteuert werden kann, insbesondere für einen Füllwolf, eine Abdreheinheit, einen Clipper, eine Längeneinheit,

5. Füllmaschine (1) nach mindestens einem der vorhergehenden Ansprüche, **dadurch gekennzeichnet, dass** die Förderpumpe (2) und die Dosierpumpe (4) als Flügelzellenförderwerke ausgebildet sind, wobei die Größe der Dosierpumpe (4) kleiner ist als die Größe der Flügelzellenpumpe (2), wobei insbesondere das Volumen, das von der Dosierpumpe pro Umdrehung gefördert werden kann, kleiner ist als das entsprechende Volumen der Förderpumpe.

6. Füllmaschine (1) nach mindestens Anspruch 5, **dadurch gekennzeichnet, dass** die Dosierpumpe (4) derart ausgebildet ist, dass die Anzahl der Flügelzellen und/oder das Volumen der Flügelzellen (9) veränderbar ist, wobei vorzugsweise ein Rotor (10) und/oder die Pumpenflügel (11) austauschbar angeordnet sind und/oder Distanzelemente (12) einsetzbar sind, die das Volumen der Flügelzellen (9) verkleinern

7. Füllmaschine (1) nach mindestens einem der vorhergehenden Ansprüche, **dadurch gekennzeichnet, dass** die Antriebe (3, 7) derart angesteuert werden können, dass eine Differenz $|\Delta p|$ zwischen einem ersten Druck $p_1$ vor der Dosierpumpe (4) und einem Druck $p_2$ nach der Dosierpumpe (4) in einem definierten Bereich von vorzugsweise $|\Delta p| = 0$ bis 5 bar liegt und insbesondere **gekennzeichnet durch** einen ersten Drucksensor (14), der in Förderrichtung vor der Dosierpumpe (4) angeordnet ist und einen zweiten Drucksensor (15), der in Förderrichtung nach der Dosierpumpe (4) angeordnet ist, wobei die Messwerte vorzugsweise der Maschinensteuerung (8) zugeführt werden können und die Maschinensteuerung die Antriebe (3, 7) derart ansteuert, dass die Druckdifferenz $|\Delta p|$ zwischen den von dem ersten und zweiten Drucksensor (14, 15) gemessenen Drücken in dem definierten Bereich liegt.

8. Verfahren zum Abfüllen von pastöser Masse, insbesondere mit einer Füllmaschine (1) nach mindestens einem der Ansprüche 1-7, wobei pastöse Masse über eine Förderpumpe (2) mit einem ersten Antrieb (3) zu einer Dosierpumpe (4) gefördert wird, die über einen Antriebstrang (5) von einem in der Füllmaschine (1) integrierten zweiten Antrieb (7) angetrieben wird, wobei die Dosierpumpe (4) als austauschbares Bauteil ausgebildet ist und an ihrer Einlaufseite und Auslaufseite Anschlussbereiche (20,21) aufweist, über die sie auf der Einlassseite mit dem Auslassende (6a) der Förderpumpe (2) und auf der Auslaufseite mit Zubehör und/oder Vorsatzgeräten verbindbar ist, insbesondere mit einem Füllrohr (13) oder einer Haltevorrichtung, oder einer Aufhängelinie..

9. Verfahren nach Anspruch 8, **dadurch gekennzeichnet, dass** von einer Einrichtung (16) erfasst wird, ob eine Dosierpumpe (4) angekoppelt ist und/oder angetrieben werden soll, wobei wenn erfasst wird, dass eine Dosierpumpe (4) eingebaut ist, die Maschinensteuerung (8) den zweiten Antrieb (7) für die Verwendung der Dosierpumpe (4) ansteuert und wenn erfasst wird, dass keine Dosierpumpe (4) eingebaut ist, der zweite Antrieb für die Verwendung anderer Vorsatzgeräte angesteuert werden kann.

10. Verfahren nach mindestens einem der Ansprüche 8 oder 9, **dadurch gekennzeichnet, dass** der Druck $p_1$ in Förderrichtung vor der Dosierpumpe (4) gemessen wird und der Druck $p_2$ hinter der Dosierpumpe (4) gemessen wird und die Antriebe der Förderpumpe (2) und der Dosierpumpe (4) derart angesteuert werden, dass ein vorher definierter Wert, von insbesondere $|p_1 - p_2| = |\Delta p| = 0 - 5$ bar eingehalten wird.

11. Verfahren nach mindestens einem der Ansprüche 8-10, **dadurch gekennzeichnet, dass** das Volumen und/oder die Anzahl der Flügelzellen (9) der Dosierpumpe (4) verändert werden, insbesondere in Abhängigkeit von mindestens einem der folgenden Parameter: Gewicht der zu erzeugenden Einzelportionen, Sollförderleistung der Füllmaschine, Art und/oder Viskosität der abzufüllenden Masse, Stückigkeit der Einlagen.

12. Verfahren nach mindestens einem der Ansprüche 8-11, **dadurch gekennzeichnet, dass** der Druck $p_1$ am Auslass der Förderpumpe (2) oder das geförderte Volumen/ Zeit geregelt wird , d.h. die die Förderpumpe (2) insbesondere lagegeregelt wird.

13. Verfahren nach mindestens einem der Ansprüche 8-12, **dadurch gekennzeichnet, dass** der Druck $p_2$ nach dem Auslauf der Dosierpumpe (4) oder das geförderte Volumen/ Zeit geregelt wird d.h. die Dosierpumpe (4) insbesondere lagegeregelt wird.

**14.** Füllmaschine nach mindestens einem der Ansprüche 1-7, **dadurch gekennzeichnet, dass** die Dosierpumpe (4) außerhalb des Füllmaschinengehäuses (17) angeordnet ist und der zweite Antrieb (7) innerhalb des Füllmaschinengehäuses (17) angeordnet ist und am Füllmaschinengehäuse (17) eine Kupplung (19) angeordnet ist zum Ankoppeln des Getriebe- bzw. Antriebstrangs (5) an den zweiten Antrieb (7).

**15.** Verfahren nach mindestens einem der Ansprüche 8-13, **dadurch gekennzeichnet, dass** die Antriebe (7) und (3) derart angetrieben werden, dass gilt, dass $|p_0 - p_1| > |p_1 - p2|$, wobei $p_0$ der Druck auf der Saugseite der Förderpumpe (2) ist, $p_1$ der Druck am Auslass der Förderpumpe (2) vor der Dosierpumpe (4), und $p_2$ der Druck am Auslass der Dosierpumpe (4).

**Claims**

**1.** Filling machine (1) for filling a pasty mass, in particular for the production of sausages, comprising:

a delivery pump (2) for conveying the pasty mass with a first drive (3),
a dosing pump (4) coupled to an outlet (6) of said delivery pump (2) and
a drive train (5) via which said dosing pump (4) is coupled to a second drive (7) integrated into said filling machine (1),
wherein said dosing pump (4) is configured as an exchangeable component and on its inlet side and outlet side comprises connection regions (20,21) via which it can on the inlet side be connected to the outlet end (6a) of said delivery pump (2) and on the outlet side with accessories and/or auxiliary devices, in particular to a stuffing tube (13), or a support device, or a hanging line.

**2.** Filling machine (1) according to claim1, **characterized in that** said filling machine (1) comprises a device for detecting whether a dosing pump (4) is coupled and/or is to be driven by said second drive (7), where said device comprises either
a sensor which detects whether said dosing pump (4) is installed and/or
a manual input device and/or
a product memory in which it is stored for different products to be produced whether said dosing pump is to be driven by said second drive, where this information can be passed to a machine controller.

**3.** Filling Machine (1) according to claim 1 or 2, **characterized in that** said filling machine (1) comprises a machine controller (8) which actuates said first drive (3) or said first and second drives (3, 7).

**4.** Filling Machine (1) according to one of the claims 1-3, **characterized in that** said second drive (7) is a drive which can be actuated by said machine controller (8) for the use of other auxiliary devices, in particular for an inline grinder, a twist-off unit, a clipper, a length measuring unit.

**5.** Filling Machine (1) according to at least one of the preceding claims, **characterized in that** said delivery pump (2) and said dosing pump (4) are configured as rotary vane conveying units, where the size of said dosing pump (4) is smaller than the size of said rotary vane pump (2), where in particular the volume that can be delivered by said dosing pump for every revolution is smaller than the respective volume of said delivery pump.

**6.** Filling machine (1) according to at least claim 5, **characterized in that** said dosing pump (4) is configured such that the number of vane chambers and/or the volume of said vane chambers (9) is variable, where preferably a rotor (10) and/or the pump vanes (11) are arranged to be exchangeable and/or spacer elements (12) can be employed that reduce the volume of said vane chambers (9).

**7.** Filling Machine (1) according to at least one of the preceding claims, **characterized in that** said drives (3, 7) can be actuated such that a difference $|\Delta p|$ between a first pressure $p_1$ upstream of said dosing pump (4) and a pressure $p_2$ downstream of said dosing pump (4) is in a defined range of preferably $|\Delta p|$ = 0 to 5 bar, and is in particular **characterized by** a first pressure sensor (14) being arranged in the conveying direction upstream of said dosing pump (4) and a second pressure sensor (15) being arranged in the conveying direction downstream of said dosing pump (4), where the measured values can preferably be passed to said machine controller (8) and said machine controller actuates said drives (3, 7) such that said pressure difference $|\Delta p|$ between the pressures measured by said first and said second pressure sensors (14, 15) is within said defined range.

**8.** Method for filling a pasty mass, in particular with a filling machine (1) according to at least one of the claims 1-7, where said pasty mass is conveyed via a delivery pump (2) with a first drive (3) to a dosing pump (4) which is via a drive train (5) driven by a second drive (7) integrated into said filling machine (1)
wherein said dosing pump (4) is configured as an exchangeable component and on its inlet side and outlet side comprises connection regions (20,21) via which it can on the inlet side be connected to the outlet end (6a) of said delivery pump (2) and on the outlet side with accessories and/or auxiliary devices, in particular to a stuffing tube (13), or a support device, or a hanging line.

9. Method according to claim 8, **characterized in that** it is detected by a device (16) whether a dosing pump (4) is coupled and/or is to be driven, where, when it is detected that a dosing pump (4) is installed, a machine controller (8) actuates said second drive (7) for the use of said dosing pump (4), and if
it is detected that no dosing pump (4) is installed, said second drive can be actuated for the use of other auxiliary devices.

10. Method according to at least one of the claims 8 or 9, **characterized in that** pressure $p_1$ is measured in the conveying direction upstream of said dosing pump (4) and pressure $p_2$ downstream of said dosing pump (4) and said drives of said delivery pump (2) and of said dosing pump (4) can be actuated such that a predefined value of in particular $|p_1-p_2| = \Delta p = 0$ to 5 bar is maintained.

11. Method according to at least one of the claims 8-10, **characterized in that** the volume and/or the number of vane chambers (9) of said dosing pump (4) are altered, in particular in dependence of at least one of the following parameters: the weight of the individual portion to be produced, the nominal capacity of said filling machine, the type and/or the viscosity of the mass to be filled, the size of the pieces of the product filling.

12. Method according to at least one of the claims 8-11, **characterized in that** the pressure $p_1$ at said outlet of said delivery pump (2) or the delivered volume/time is controlled, i.e. said delivery pump (2) is in particular position-controlled.

13. Method according to at least one of the claims 8-12, **characterized in that** said pressure $p_2$ at said outlet of said dosing pump (4) or the delivered volume/time is controlled, i.e. said dosing pump (4) is in particular position-controlled.

14. Filling machine according to at least one of the claims 1-7, **characterized in that** said dosing pump (4) is arranged outside the filling machine housing (17) and said second drive (7) within said filling machine housing (17) and a coupling (19) is arranged on said filling machine housing (17) for coupling said transmission or drive train (5), respectively, to said second drive (7).

15. Method according to at least one of the claims 8-13, **characterized in that** said drives (7) and (3) are driven such that the following is true $|p_0 - p_1| > |p_1 - p_2|$, where $p_0$ is the pressure on the suction side of said delivery pump (2), $p_1$ is the pressure at the outlet of said delivery pump (2) upstream of said dosing pump (4), and $p_2$ is the pressure at the outlet of said dosing pump (4).

## Revendications

1. Machine de remplissage (1) pour le remplissage d'une masse pâteuse, en particulier pour confectionner des saucisses, comprenant:

   une pompe d'alimentation (2) pour le transport de la masse pâteuse avec un premier entraînement (3), une pompe de dosage (4), qui est couplée à une sortie (6) de la pompe d'alimentation (2) et
   une chaîne cinématique (5), par laquelle la pompe de dosage (4) est couplée à un deuxième entraînement (7) intégré dans la machine de remplissage (1),
   dans laquelle la pompe de dosage (4) est réalisée sous la forme d'un composant remplaçable et présente à son côté d'entrée et à son côté de sortie des zones de raccordement (20, 21), par lesquelles elle peut être reliée sur le côté d'entrée à l'extrémité de sortie (6a) de la pompe d'alimentation (2) et sur le côté de sortie à un accessoire et/ou à des appareils adaptateurs, en particulier à un tube de remplissage (13) ou à un dispositif de support ou à une ligne suspendue.

2. Machine de remplissage (1) selon la revendication 1, **caractérisée en ce que** la machine de remplissage (1) présente un dispositif pour détecter si une pompe de dosage (4) est accouplée et/ou doit être entraînée par le deuxième entraînement (7), dans laquelle le dispositif comprend ou bien un capteur pour détecter si la pompe de dosage (4) est accouplée et/ou un dispositif d'entrée manuel et/ou une mémoire de produit, dans laquelle on a mémorisé pour différents produits à confectionner si la pompe de dosage doit être entraînée par le deuxième entraînement, dans laquelle cette information peut être retransmise à une commande de la machine.

3. Machine de remplissage (1) selon la revendication 1 ou 2, **caractérisée en ce que** la machine de remplissage (1) comprend une commande de machine (8), qui commande le premier entraînement (3) ou le premier et le deuxième entraînement (3, 7).

4. Machine de remplissage (1) selon au moins une des revendications 1 à 3, **caractérisée en ce que** le deuxième entraînement (7) est un entraînement qui peut être commandé par la commande de machine (8) pour l'utilisation d'autres appareils adaptateurs, en particulier pour une tête de remplissage, une unité de fermeture, un appareil de coupe, une unité de longueur.

5. Machine de remplissage (1) selon au moins une des revendications précédentes, **caractérisée en ce que** la pompe d'alimentation (2) et la pompe de dosage (4) sont réalisées sous la forme de mécanismes de transport à palettes, dans laquelle la grandeur de la pompe de dosage (4) est inférieure à la grandeur de la pompe à palettes (2), dans laquelle en particulier le volume, qui peut être transporté par tour par la pompe de dosage, est plus petit que le volume correspondant de la pompe d'alimentation.

6. Machine de remplissage (1) selon au moins la revendication 5, **caractérisée en ce que** la pompe de dosage (4) est réalisée de telle manière que le nombre des cellules et/ou le volume des cellules (9) soit modifiable, dans laquelle de préférence un rotor (10) et/ou les palettes (11) de la pompe sont remplaçables et/ou des éléments d'écartement (12) peuvent être insérés, qui diminuent le volume des cellules (9).

7. Machine de remplissage (1) selon au moins une des revendications précédentes, **caractérisée en ce que** les entraînements (3, 7) peuvent être commandés, de telle manière qu'une différence $|\Delta p|$ entre une première pression $p_1$ avant la pompe de dosage (4) et une pression $p_2$ après la pompe de dosage (4) se situe dans une plage de préférence $|\Delta p| = 0$ à 5 bars, et en particulier **caractérisée par** un premier capteur de pression (14), qui est disposé avant la pompe de dosage (4) dans la direction de transport et un deuxième capteur de pression (15), qui est disposé après la pompe de dosage (4) dans la direction de transport, dans laquelle les valeurs de mesure peuvent de préférence être envoyées à la commande de machine (8) et la commande de machine commande les entraînements (3, 7) de telle manière que la différence de pression $|\Delta p|$ entre les pressions mesurées par le premier et le deuxième capteur de pression (14, 15) se situe dans une plage définie.

8. Procédé de remplissage de masse pâteuse, en particulier avec une machine de remplissage (1) selon au moins une des revendications 1 à 7, dans lequel on transporte une masse pâteuse au moyen d'une pompe d'alimentation (2) avec un premier entraînement (3) vers une pompe de dosage (4), qui est entraînée par un deuxième entraînement (7) intégré dans la machine de remplissage (1) par une chaîne cinématique (5), dans lequel la pompe de dosage (4) est réalisée sous la forme d'un composant remplaçable et présente à son côté d'entrée et à son côté de sortie des zones de raccordement (20, 21), par lesquelles elle peut être reliée sur le côté d'entrée à l'extrémité de sortie (6a) de la pompe d'alimentation (2) et sur le côté de sortie à un accessoire et/ou à des appareils adaptateurs, en particulier à un tube de remplissage (13) ou à un dispositif de support ou à une ligne suspendue.

9. Procédé selon la revendication 8, **caractérisé en ce que** l'on détecte au moyen d'un dispositif (16) si une pompe de dosage (4) est accouplée et/ou doit être entraînée, dans lequel, lorsque l'on détecte qu'une pompe de dosage (4) est insérée, la commande de machine (8) commande le deuxième entraînement (7) pour l'utilisation de la pompe de dosage (4) et, lorsque l'on détecte qu'aucune pompe de dosage (4) n'est insérée, le deuxième entraînement peut être commandé pour l'utilisation d'autres appareils adaptateurs.

10. Procédé selon au moins une des revendications 8 ou 9, **caractérisé en ce que** l'on mesure la pression $p_1$ avant la pompe de dosage (4) dans la direction de transport et on mesure la pression $p_2$ après la pompe de dosage (4) et on commande les entraînements de la pompe d'alimentation (2) et de la pompe de dosage (4), de telle manière que l'on respecte une valeur préalablement définie, en particulier de $|p_1 - p_2| = |\Delta p| = 0 - 5$ bars.

11. Procédé selon au moins une des revendications 8 à 10, **caractérisé en ce que** l'on modifie le volume et/ou le nombre de cellules (9) de la pompe de dosage (4), en particulier en fonction d'au moins un des paramètres suivants: poids des portions individuelles à transporter, capacité de transport théorique de la machine de remplissage, nature et/ou viscosité de la masse de remplissage, taille des morceaux à incorporer.

12. Procédé selon au moins une des revendications 8 à 11, **caractérisé en ce que** l'on règle la pression $p_1$ à la sortie de la pompe d'alimentation (2) et/ou le volume transporté par unité de temps, c'est-à-dire que l'on règle en particulier la position de la pompe d'alimentation (2).

13. Procédé selon au moins une des revendications 8 à 12, **caractérisé en ce que** l'on règle la pression $p_2$ après la sortie de la pompe de dosage (4) ou le volume transporté par unité de temps, c'est-à-dire que l'on règle en particulier la position de la pompe de dosage (4).

14. Machine de remplissage selon au moins une des revendications 1 à 7, **caractérisée en ce que** la pompe de dosage (4) est disposée à l'extérieur du boîtier (17) de la machine de remplissage et le deuxième entraînement (7) est disposé à l'intérieur du boîtier (17) de la machine de remplissage et un accouplement (19) est disposé sur le boîtier (17) de la machine de remplissage pour le couplage du train d'engrenages ou de la chaîne cinématique (5) au deuxième entraînement (7).

15. Procédé selon au moins une des revendications 8 à 13, **caractérisé en ce que** l'on entraîne les entraînements (7) et (3) de telle manière que l'on ait $|p_0 - p_1| > |p_1 - p_2|$, dans lequel $p_0$ est la pression sur le côté d'aspiration de la pompe d'alimentation (2), $p_1$ est la pression à la sortie de la pompe d'alimentation (2) avant la pompe de dosage (4) et $p_2$ est la pression à la sortie de la pompe de dosage (4).

FIG. 1

FIG. 2

FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4417906 A1

- EP 1829451 A